# DEMANDE DE BREVET EUROPEEN

(11) **EP 0 924 838 A1**
(43) Date de publication de la demande: **23.06.1999**
(21) Numéro de dépôt: 98123671.4
(22) Date de dépôt: 11.12.1998
(51) Int. Cl.: H02K 1/00, H02K 35/02, H02K 21/18

(54) **Générateur d'énergie électrique monophasé**

(30) Priorité: 19.12.1997 EP 97122468
(71) Demandeur: Eta SA Fabriques d'Ebauches, 2540 Grenchen (CH)
(72) Inventeur: Béguin, Jean-Luc, 2036 Cormondrèche (CH); Serex, Florian, 2515 Prêles (CH); Taghezout, Daho, 1110 Morges (CH); Guérin, Yves, 68300 St-Louis (FR)
(74) Mandataire: Balsters, Robert

(57) **Abrégé**

Le générateur monophasé (1) comporte un rotor (2) ayant des moyens magnétiques (6a, 6b) produisant 2N champs magnétiques radiaux et de sens alternés, et un stator (3) comprenant une bobine (13), une première (7) et une deuxième armature (8), une première série de N dents (9) disposées autour du rotor (2) et reliées magnétiquement à la première armature (7), une deuxième série de N dents (10) disposées autour du rotor (2), chacune entre deux dents (9) de la première série, et reliées magnétiquement à la deuxième armature (8), et des moyens de liaison pour relier magnétiquement la première (7) et la deuxième armature (8).

La bobine (13) est enroulée autour d'un noyau (14) qui fait partie des moyens de liaison magnétique de la première (7) et de la deuxième armature (8).

## Description

La présente invention concerne un générateur d'énergie électrique monophasé comportant un rotor ayant un axe de rotation et comprenant des moyens magnétiques présentant 2N pôles magnétiques disposés régulièrement à la périphérie dudit rotor et produisant à l'extérieur dudit rotor 2N champs magnétiques radiaux de sens alternés; et un stator comportant au moins une bobine et des moyens de couplage pour coupler magnétiquement ladite bobine auxdits moyens magnétiques. En particulier, la présente invention concerne un générateur d'énergie électrique de petit volume pouvant notamment être intégré dans une pièce d'horlogerie munie d'une masse oscillante.

Un but de la présente invention est de fournir un générateur monophasé ayant une grande efficacité et donc un très bon rendement, tout en étant de fabrication aisée pour un coût relativement faible.

A cet effet, l'invention concerne un générateur ayant les caractéristiques mentionnées à la revendication 1 ci-jointe.

D'autres buts et avantages de la présente invention seront rendus évidents par la description de quelques unes de ses formes d'exécution qui va être faite ci-après, ces formes d'exécution n'étant décrites qu'à titre d'exemples non limitatifs. Cette description sera faite en se référant au dessin annexé dans lequel :
- la figure 1 est une vue en plan d'une première forme d'exécution du générateur selon la présente invention;
- la figure 2 est une coupe du générateur de la figure 1 faite selon le plan II-II de cette figure 1;
- la figure 3 est une vue en plan d'une deuxième forme d'exécution du générateur selon la présente invention;
- la figure 4 est une coupe du générateur de la figure 3 faite selon le plan IV-IV de cette figure 3;
- la figure 5 est une vue en plan d'une autre forme d'exécution du générateur selon la présente invention; et
- la figure 6 est une coupe du générateur de la figure 5 faite selon le plan VI-VI de cette figure 5.

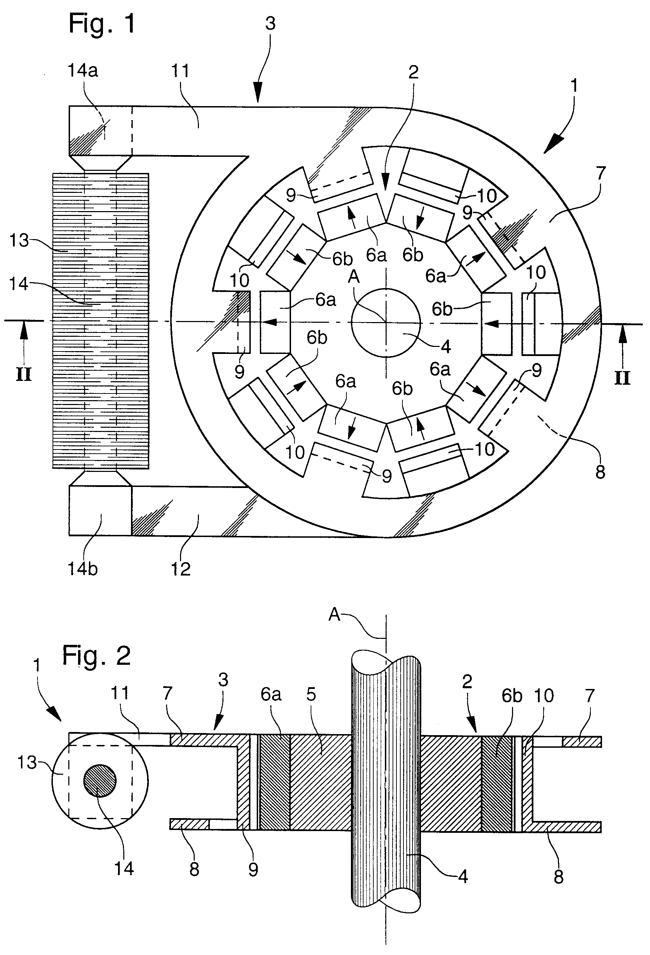

Dans sa forme d'exécution représentée aux figures 1 et 2, le générateur selon la présente invention, qui est désigné par la référence générale 1, comporte un rotor et un stator respectivement désignés par les références 2 et 3.

Le rotor 2 comporte un arbre 4, qui n'a été représenté que partiellement, pouvant pivoter dans des paliers, non représentés, autour de son axe A. Comme cela sera rendu évident plus loin, cet axe A constitue l'axe de rotation du rotor 2.

Le rotor 2 comporte encore un moyeu 5 solidaire de l'arbre 4 et ayant, dans cet exemple, la forme d'un cylindre décagonal droit et régulier, dont l'axe coïncide avec l'axe de rotation A de l'arbre 4. Le moyeu 5 présente donc dix faces planes rectangulaires parallèles à l'axe A.

Pour une raison que l'homme du métier comprendra aisément, le moyeu 5 est de préférence réalisé dans un matériau magnétique doux ayant une réluctance faible. Toutefois, pour des raisons de fabrication et d'assemblage, ce moyeu 5 peut être notamment en acier.

De plus, le rotor 2 comporte, dans cet exemple, dix aimants bipolaires désignés par la référence commune 6 ayant chacun la forme d'un parallélépipède rectangle et fixés, chacun, sur une des faces latérales du moyeu 5.

L'homme du métier comprendra aisément que les moyens utilisés pour fixer les aimants 6 au moyeu 5, qui peuvent être de diverses natures et n'ont pas été représentés, doivent avoir une réluctance aussi faible que possible.

Les axes d'aimantation des aimants 6, qui sont symbolisés par des flèches sans référence dans la figure 1, ont tous une direction radiale, mais leurs sens sont alternés. Les aimants 6 présentent donc à la périphérie du rotor 2 un nombre pair, égal à dix dans le présent exemple, de pôles magnétiques alternativement Nord et Sud. Les aimants 6 produisent donc, à l'extérieur du rotor 2, dix champs magnétiques radiaux de sens alternés.

Selon qu'ils présentent à la périphérie du rotor 2 un pôle magnétique Nord ou un pôle magnétique Sud, les aimants 6 seront respectivement désignés ci-après par la référence 6a ou la référence 6b.

Le stator 3 du générateur 1 comporte une première et une deuxième armature désignées respectivement par les références 7 et 8 et ayant toutes deux la forme générale d'un anneau circulaire plan centré sur l'axe de rotation A et perpendiculaire à ce dernier. Ces armatures 7 et 8 sont distantes l'une de l'autre, chacune d'entre elles étant située au moins approximativement au niveau de l'une des faces terminales du moyeu 5, et elles sont toutes deux réalisées en un matériau magnétique doux.

Dans le présent exemple le stator 3 comporte encore une première série de cinq dents, toutes désignées par la référence 9, réalisées en un matériau magnétique doux et disposées régulièrement autour du rotor 2 dans l'espace qui sépare ce dernier des armatures 7 et 8. Les dents 9 sont décalées angulairement d'un angle de 360°/N et sont parallèles à l'axe de rotation A du rotor 2, elles sont reliées mécaniquement et magnétiquement à l'armature 7 et s'étendent en direction de l'armature 8.

De plus, le stator 3 comporte une deuxième série de cinq dents, toutes désignées par la référence 10, également réalisées en un matériau magnétique doux et aussi disposées régulièrement autour du rotor 2 dans l'espace qui sépare ce dernier des armatures 7 et 8, chaque dent 10 étant en outre située entre deux des dents 9. Les dents 10 sont donc également décalées angulairement d'un angle de 360°/N. En outre, elles sont également parallèles à l'axe de rotation A du rotor 2, mais elles sont reliées mécaniquement et magnétiquement à l'armature 8 et s'étendent en direction de l'armature 7.

On voit que le nombre total de dents 9 et 10 du stator 3 est égal au nombre total d'aimants 6a et 6b du rotor 2 et que, lorsque ce dernier occupe une position telle que celle qu'il a dans la figure 1, chacune des dents 9 et 10 est située en regard de l'un des aimants 6a et 6b.

Il est évident que les divers composants du générateur 1 qui viennent d'être décrits sont dimensionnés et disposés de manière que le rotor 2 puisse tourner librement, sans toucher aucun des éléments du stator 3, mais que la distance qui sépare les aimants 6a et 6b des dents 9 et 10 soit telle que le flux mutuel aimant-bobine et le couple réluctant aient des valeurs conjointement avantageuses.

Toujours dans le présent exemple, le stator 3 comporte encore un premier bras 11 et un deuxième bras 12, tous deux réalisés en matériau magnétique doux, qui sont respectivement reliés mécaniquement et magnétiquement à l'extérieur de l'armature 7 et à l'extérieur de l'armature 8.

L'homme du métier verra aisément que les deux ensembles respectivement constitués par l'armature 7, les dents 9 et le bras 11, et par l'armature 8, les dents 10 et le bras 12 sont de préférence réalisés chacun sous la forme d'une seule et même pièce, par exemple par découpage et pliage d'une plaque d'un matériau adéquat.

En outre, l'homme du métier verra que ces deux pièces peuvent être identiques, ce qui simplifie la fabrication du générateur et diminue son prix de revient.

Le stator 3 comporte en outre une bobine 13 enroulée autour d'un noyau 14 dont les extrémités 14a et 14b sont respectivement reliées mécaniquement et magnétiquement aux bras 11 et 12.

Le noyau 14 de la bobine 13 est bien entendu aussi réalisé dans un matériau magnétique doux ayant une faible réluctance, et les moyens qui assurent sa liaison avec les bras 11 et 12, qui n'ont pas été représentés, sont aussi agencés de manière à présenter une réluctance aussi faible que possible.

Le noyau 14 de la bobine 13 assure une liaison mécanique entre les deux ensembles mentionnés ci-dessus. Mais il est en général nécessaire de renforcer cette liaison mécanique en prévoyant de fixer une ou plusieurs entretoises à ces ensembles, de manière à garantir que ces derniers gardent des positions réciproques correctes en toutes circonstances. Pour une raison que l'homme du métier comprendra aisément, de telles entretoises, qui n'ont pas été représentées, doivent être réalisées en un matériau non magnétique.

L'homme du métier comprendra aussi que, selon les dimensions relatives des divers composants du générateur 1, il peut être nécessaire de disposer d'autres entretoises entre chacune des extrémités 14a et 14b du noyau 14 et les bras 11 et, respectivement, 12, de telles entretoises devant bien entendu être réalisée en un matériau magnétique doux ayant une faible réluctance.

L'homme du métier verra également que des considérations semblables à celles qui viennent d'être faites à propos des entretoises de liaison des ensembles mentionnés ci-dessus et/ou à propos des entretoises de liaison des extrémités du noyau de la bobine avec les bras respectifs pourront aussi être faites dans le cas des autres formes d'exécution du générateur selon la présente invention qui seront décrites plus loin. Ces considérations ne seront donc pas répétées.

Il faut encore noter que les divers composants du stator 3 qui viennent d'être décrits sont conformés, dimensionnés et agencés les uns par rapport aux autres de manière que l'ensemble constitué par l'armature 7, les dents 9 et le bras 11 d'une part, et l'ensemble constitué par l'armature 8, les dents 10 et le bras 12 d'autre part ne soient reliés magnétiquement que par l'intermédiaire du noyau 14 de la bobine 13.

Comme on le voit facilement, il résulte de la constitution et de la disposition des divers composants du générateur 1 qui viennent d'être décrits que, lorsque le rotor 2 tourne par rapport au stator 3, la bobine 13 produit une tension électrique en réponse aux variations du flux magnétique, provenant des aimants 6a et 6b, qui traverse le noyau 14 alternativement dans un sens et dans l'autre.

Le fait que la bobine 13 du générateur 1 soit enroulée sur un noyau, en l'occurrence le noyau 14, facilite beaucoup sa fabrication et sa manipulation.

En outre, toutes autres choses étant égales, la longueur moyenne des spires de la bobine 13 du générateur 1, et donc la longueur totale du fil qui forme cette bobine 13, sont beaucoup plus faibles que la longueur moyenne des spires de la bobine de ce générateur connu et, respectivement, que la longueur totale du fil qui forme cette dernière bobine.

Il résulte de ces deux faits que le prix de revient de la bobine 13 du générateur 1, et donc le prix de revient de ce dernier, sont plus faibles que le prix de revient de la bobine du générateur connu et, respectivement, que le prix de revient de ce dernier.

De plus, et toujours toutes autres choses étant égales, la résistance électrique de la bobine 13 du générateur 1 est plus faible que celle de la bobine du générateur connu puisque la longueur totale du fil qui forme cette bobine 13 est plus faible que celle du fil qui forme la bobine de ce dernier générateur.

Il en découle que les pertes par effet Joule dont la bobine 13 est le siège sont plus faibles que dans le cas du générateur connu, et que le rendement du générateur 1 est donc plus élevé que celui de ce générateur connu. Il en découle également que les variations de la tension fournie par le générateur 1 selon que celui-ci fournit du courant ou non sont plus faibles que dans le cas du générateur connu.

L'homme du métier verra aisément que le rotor 2 du générateur 1 peut comporter un nombre d'aimants permanents 6a et 6b différent de dix, ce nombre étant cependant toujours pair et toujours égal au nombre total de dents que comporte le stator 3.

De même, et quel que soit leur nombre, les aimants 6a et 6b peuvent être remplacés par un aimant permanent multipolaire unique, cet aimant multipolaire étant bien entendu agencé de manière à présenter à la périphérie du rotor 2 autant de pôles magnétiques que l'ensemble des aimants bipolaires qu'il remplace et de manière que les champs magnétiques qu'il produit à l'extérieur du rotor 2 soient également radiaux et de sens alternés.

D'une manière générale, on voit que le rotor d'un générateur tel que celui qui vient d'être décrit comporte des moyens magnétiques, constitués par plusieurs aimants permanents bipolaires ou par un aimant permanent multipolaire annulaire, présentant 2N pôles magnétiques disposés régulièrement à la périphérie du rotor et produisant à l'extérieur de ce dernier 2N champs magnétiques radiaux et de sens alternés. On peut également dire que le stator d'un tel générateur comporte deux séries de N dents chacune, les N dents de la première série et les N dents de la deuxième série étant reliées magnétiquement à la première et, respectivement, à la deuxième armature que comporte ce stator.

L'homme du métier verra également que les considérations qui précédent s'appliquent évidemment aux autres formes d'exécution du générateur selon la présente invention qui seront décrites plus loin. Ces considérations ne seront donc pas répétées.

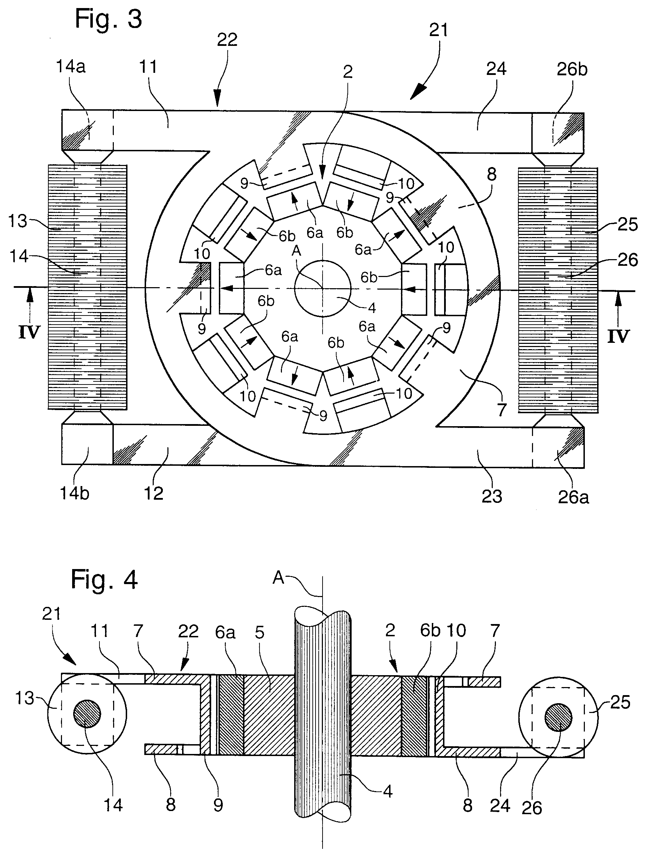

Dans sa forme d'exécution représentée aux figures 3 et 4, le générateur selon la présente invention, qui est désigné par la référence générale 21, comporte un rotor qui est désigné par la même référence 2 que le rotor du générateur 1 des figures 1 et 2 car il est identique à ce dernier. Ce rotor 2 du générateur 21 ne sera donc pas décrit à nouveau.

Le générateur 21 comporte également un stator, désigné par la référence 22, qui comprend des composants 7 à 14 identiques aux composants du stator 3 du générateur 1 désignés par les mêmes références et disposés comme ces derniers. Ces composants 7 à 14 du stator 22 ne seront donc pas non plus décrits à nouveau.

Le stator 22 comporte encore un troisième bras 23 relié à l'armature 7 et un quatrième bras 24 relié à l'armature 8, ainsi qu'une deuxième bobine 25 enroulée sur un noyau 26 dont les extrémités 26a et 26b sont respectivement reliées aux bras 23 et 24.

On voit facilement que, dans le générateur 21 des figures 3 et 4, le flux magnétique issu des aimants 6a et 6b se sépare en deux parties au moins sensiblement égales dont l'une passe par le noyau 14 de la bobine 13 et l'autre passe par le noyau 26 de la bobine 25.

On voit également que, lorsque le rotor 2 tourne par rapport au stator 22, chacune des bobines 13 et 25 produit une tension électrique en réponse aux variations de la partie du flux magnétique qui traverse son noyau 14, respectivement son noyau 26.

On notera que l'armature 7 avec ses deux bras 11 et 23 est, dans la variante représentée aux figures 3 et 4, identique à l'armature 8 avec ses deux bras 12 et 24, ce qui diminue le coût de fabrication de la génératrice.

En outre, le fait que le générateur 21 comporte deux bobines a pour avantage que seule une moitié du flux magnétique total traverse le noyau de celles-ci, ce qui permet de diminuer la section de ces noyaux sans augmenter le risque de saturation magnétique de ces derniers et/ou de diminuer ce risque de saturation. Ainsi, pour un nombre de spires donné, ce mode de réalisation permet de réduire la résistance électrique et donc les pertes par effet Joule par rapport au mode de réalisation décrit ci-avant à l'aide des figures 1 et 2. De plus, avec des noyaux de bobine droits facilitant l'enroulement du fil électrique, l'agencement du présent mode de réalisation permet d'obtenir un grand nombre de spires tout en limitant l'encombrement du générateur et en lui conservant une forme compacte. Cet avantage de ce mode de réalisation reste aussi pour des noyaux courbes avec un enroulement parallèle des spires sur les noyaux.

Il faut noter que, dans les générateurs selon la présente invention tels que les générateurs 1 et 21 décrits ci-dessus, il est possible de fixer à l'une et/ou à l'autre des armatures 7 et 8 une pièce en un matériau non magnétique munie d'un palier de maintien de l'arbre 4 du rotor 2. Une telle forme d'exécution de ces générateurs n'a pas été représentée.

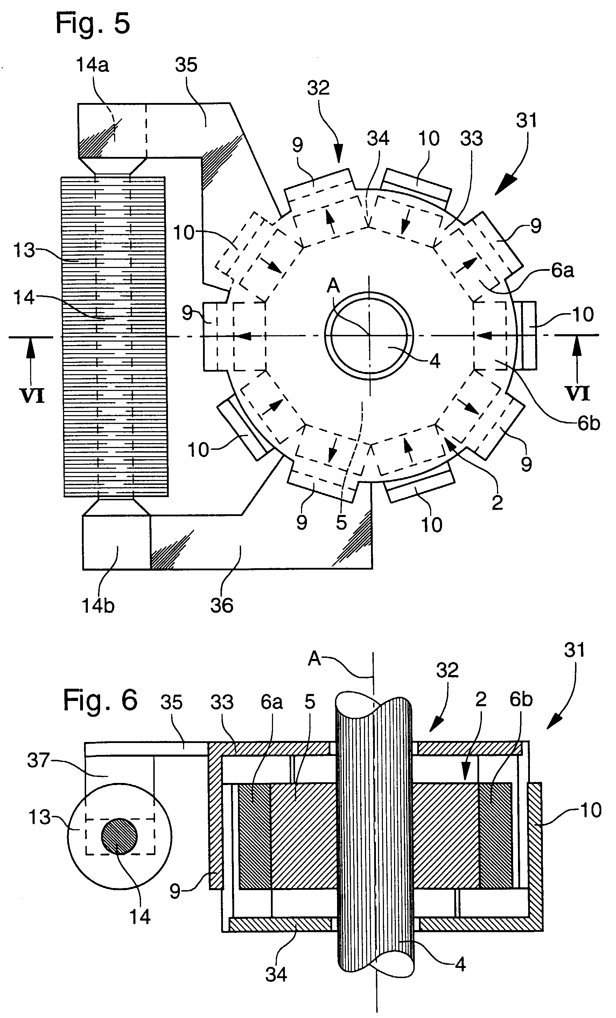

Dans sa forme d'exécution représentée aux figures 5 et 6, le générateur selon la présente invention, qui est désigné dans son ensemble par la référence 31, comporte un rotor qui est aussi désigné par la même référence 2 que le rotor du générateur 1 des figures 1 et 2 car il est également identique à ce dernier. Ce rotor 2 du générateur 31 ne sera donc pas non plus décrit à nouveau.

Le générateur 31 comporte aussi un stator, désigné par la référence 32, qui comprend deux armatures 33 et 34 ayant chacune, dans cet exemple, la forme de plaques annulaires centrées sur l'axe de rotation A. Les armatures 33 et 34 sont réalisées en un matériau magnétique doux et sont disposées de part et d'autre du rotor 2, à une certaine distance de ce dernier. Chacune des armatures 33 et 34 présente une ouverture centrale, non référencée, traversée par l'arbre 4 du rotor 2.

Il faut noter que, le cas échéant, un palier de maintien de l'arbre 4 peut être disposé dans l'un et/ou l'autre des ouvertures centrales ménagées dans les armatures 33 et 34. Une telle forme d'exécution du générateur 31 n'a pas été représentée.

Le stator 32 comporte encore deux séries de cinq dents respectivement désignées par les références 9 et 10 car elles sont semblables aux dents 9 et 10 des générateurs 1 et 21 décrits ci-dessus.

Les dents 9 du stator 32 sont disposées régulièrement autour du rotor 2 et sont reliées mécaniquement et magnétiquement à la périphérie de l'armature 33. Les dents 10 du stator 32 sont également disposées régulièrement autour du rotor 2, chacune entre deux des dents 9, et elles sont reliées mécaniquement et magnétiquement à la périphérie de l'armature 34.

Comme dans les générateurs 1 et 21, les dents 9 et 10 du générateur 31 s'étendent parallèlement à l'axe de rotation A du rotor 2 dans la direction de l'armature 34 et, respectivement, de l'armature 33. De même, le nombre total des dents 9 et 10 du stator 32 est égal au nombre total des aimants 6a et 6b du rotor 2 et, lorsque ce dernier occupe une position telle que celle qu'il y a dans la figure 5, chacune des dents 9 et 10 est située en regard de l'un des aimants 6a et 6b. En outre, les divers composants du générateur 31 qui viennent d'être décrits sont évidemment dimensionnés et disposés de manière que le rotor 2 puisse tourner librement, sans toucher aucun des éléments du stator 32, mais que la distance séparant les aimants 6a et 6b des dents 9 et 10 soit telle que le flux mutuel aimant-bobine et le couple réluctant aient des valeurs conjointement avantageuses.

Le stator 32 comporte aussi un premier bras 35 et un deuxième bras 36, tous deux réalisés en un matériau magnétique doux, qui sont respectivement reliés mécaniquement et magnétiquement à la périphérie de l'armature 33 et à la périphérie de l'armature 34. On notera qu'il est possible de prévoir plusieurs bras ou un bras se séparant en plusieurs branches pour relier une armature au noyau 14.

Dans ce cas également, les deux ensembles respectivement constitués par l'armature 33, les dents 9 et le bras 35, et par l'armature 34, les dents 10 et le bras 36 sont de préférence réalisés chacun sous la forme d'une seule et même pièce.

Le stator 32 comporte encore une bobine 13 enroulée autour du noyau 14. Les extrémités 14a et 14b du noyau 14 sont respectivement reliées mécaniquement et magnétiquement aux bras 35 et 36 par des moyens de fixation qui n'ont pas été représentés en détail. On notera simplement que, dans ce cas, une première entretoise 37 en un matériau magnétique doux est disposée entre l'extrémité 14a du noyau 14 et le bras 35 et une deuxième entretoise, non visible dans les figures 5 et 6 et semblable à la première, est disposée entre l'extrémité 14b du noyau 14 et le bras 36.

Toutefois, les divers composants du stator 32 qui viennent d'être décrits peuvent être conformés, dimensionnés et agencés les uns par rapport aux autres de manière que l'ensemble constitué par l'armature 33, les dents 9 et le bras 35, et l'ensemble constitué par l'armature 34, les dents 10 et le bras 36 ne soient reliés magnétiquement que par l'intermédiaire du noyau 14 de la bobine 13.

Le fonctionnement du générateur 31 ne sera pas décrit car il est tout à fait semblable à celui des générateurs 1 et 21 décrits ci-dessus. En outre, le générateur 31 présente les mêmes avantages que les générateurs 1 et 21 décrits ci-dessus. On mentionnera cependant que, par rapport à ces derniers et toutes autres choses étant égales, le générateur 31 peut être plus compact, ce qui peut faciliter son utilisation dans un dispositif tel qu'une montre-bracelet où la hauteur à disposition est limitée.

Dans une autre de ses formes d'exécution, le générateur selon la présente invention comporte, en plus de tous les composants du générateur 31 qui viennent d'être décrits, un troisième et un quatrième bras respectivement reliés mécaniquement et magnétiquement à l'armature 33 et à l'armature 34, ainsi qu'une deuxième bobine enroulée sur un noyau dont les extrémités sont aussi respectivement reliées mécaniquement et magnétiquement à ce troisième et à ce quatrième bras. Une telle forme d'exécution n'a pas été représentée car sa réalisation découle aisément de la description des autres formes d'exécution du générateur selon la présente invention qui a été faite ci-dessus.

De nombreuses modifications peuvent être apportées au générateur selon la présente invention dont quelques formes d'exécution ont été décrites ci-dessus sans pour autant sortir du cadre de cette invention.

Ainsi, par exemple, le stator d'un générateur selon la présente invention peut comporter plus de deux bobines, ce stator comprenant alors le nombre de bras qui est nécessaire pour relier mécaniquement et magnétiquement les extrémités du noyau de chacune de ces bobines à la première et à la deuxième armature.

De même, ces bras peuvent avoir des formes différentes de celles qu'ils ont dans les exemples décrits ci-dessus.

Il est ainsi possible de donner à ces bras une forme telle que la ou les bobines du générateur ne soient pas situées à proximité immédiate des armatures de ce générateur, et/ou de plier ces bras de manière que cette ou ces bobines soient situées plus haut ou plus bas, par rapport au reste du générateur, qu'elles ne le sont dans les exemples décrits ci-dessus. Ces diverses modifications de la forme de ces bras permettent le cas échéant de simplifier la conception et la fabrication du dispositif utilisant un générateur selon la présente invention, notamment lorsque l'espace disponible dans ce dispositif est limité et que ce dernier doit comporter d'autres composants ayant un volume relativement grand.

Il est également possible de donner à la bobine, ou aux bobines, du générateur la forme d'une galette mince ayant un noyau dont l'axe est parallèle à l'axe de rotation du rotor de ce générateur au lieu d'être perpendiculaire à cet axe comme dans les exemples décrits ci-dessus. Dans un tel cas, les bras reliant mécaniquement et magnétiquement ce noyau, ou ces noyaux, aux armatures du stator sont évidemment conformés et disposés en conséquence.

Une telle disposition de la ou des bobines permet, le cas échéant, de réaliser un générateur ayant une faible épaisseur tout en comportant une ou des bobines ayant un grand nombre de spires. Cette disposition permet également, le cas échéant, d'augmenter la section du noyau de cette ou de ces bobines et donc de diminuer la densité du flux magnétique traversant ce ou ces noyaux et donc le risque qu'ils soient saturés par ce flux.

## Revendications

1. Générateur d'énergie électrique monophasé comportant :
- un rotor (2) ayant un axe de rotation (A) et comprenant des moyens magnétiques (6a; 6b) présentant 2N pôles magnétiques disposés régulièrement à la périphérie dudit rotor (2) et produisant à l'extérieur dudit rotor (2) 2N champs magnétiques radiaux de sens alternés; et
- un stator (2; 22; 32) comportant au moins une bobine (13; 25) et des moyens de couplage de ladite bobine (13; 25) auxdits moyens magnétiques comprenant une première (7; 33) et une deuxième armature (8; 34) distantes l'une de l'autre, une première série de N dents (9) reliées magnétiquement à ladite première armature (7; 33), disposées régulièrement autour dudit rotor et décalées angulairement de 360°/N, cette première série de N dents s'étendant parallèlement audit axe de rotation (A) en direction de ladite deuxième armature(8; 34), une deuxième série de N dents (10) reliées magnétiquement à ladite deuxième armature (8; 34), disposées régulièrement autour dudit rotor et décalées angulairement de 360°/N, cette deuxième série de N dents étant situées chacune entre deux dents (9) adjacentes de ladite première série de dents et s'étendant parallèlement audit axe de rotation (A) en direction de ladite première armature (7; 33), et des moyens de liaison pour relier magnétiquement ladite première (7; 33) et ladite deuxième armature(8; 34); ladite bobine (13; 25) étant enroulée autour d'un noyau (14; 26) formant lesdits moyens de liaison, ce noyau ayant une première (14a; 26a) et une deuxième extrémité (14b; 26b) qui sont reliées magnétiquement à ladite première (7; 33) et, respectivement, à ladite deuxième armature (8; 34).

2. Générateur selon la revendication 1, caractérisé par le fait que lesdites armatures (7, 8) ont toutes deux la forme générale d'un anneau circulaire centré sur ledit axe de rotation (A), et que lesdites dents desdites première et deuxième séries (9, 10) sont respectivement reliées à l'intérieur desdites première et deuxième armatures (7, 8).

3. Générateur selon la revendication 1, caractérisé par le fait que lesdites armatures (33, 34) ont toutes deux la forme générale d'une plaque annulaire centrée sur ledit axe de rotation (A), et que lesdites dents (9, 10) sont disposées sur le pourtour desdites armatures (33, 34).

4. Générateur selon la revendication 1, caractérisé par le fait que ledit stator (3; 22; 32) comporte au moins une deuxième bobine (25) enroulée autour d'un deuxième noyau (26) ayant une première (26a) et une deuxième extrémité (26b), et que lesdits moyens de liaison comprennent en outre ledit deuxième noyau (26) et sont agencés de manière que lesdites première (26a) et deuxième extrémités (26b) dudit deuxième noyau (26) sont reliés magnétiquement à ladite première (7; 33) et, respectivement, à ladite deuxième armature (8; 34).
